# EUROPEAN PATENT SPECIFICATION

(11) **EP 4 347 469 B1**
(45) Date of publication and mention of the grant of the patent: **12.11.2025**
(21) Application number: 21730494.8
(22) Date of filing: 27.05.2021
(51) Int. Cl.: B66B 5/00

(54) **MONITORING METHOD, MONITORING SYSTEM, AND CONTROLLER FOR ELEVATORS.**
ÜBERWACHUNGSVERFAHREN, ÜBERWACHUNGSSYSTEM UND STEUERUNG FÜR AUFZÜGE.
PROCÉDÉ DE SURVEILLANCE, SYSTÈME DE SURVEILLANCE ET CONTRÔLEUR POUR ASCENSEURS.

(43) Date of publication of application: 10.04.2024
(73) Proprietor: KONE Corporation, 00330 Helsinki (FI)
(72) Inventor: BELOV, Mika, 00330 HELSINKI (FI); PIIRONEN, Mikko, 00330 HELSINKI (FI)
(74) Representative: Berggren Oy
(86) International application number: PCT/EP2021/064189
(87) International publication number: WO 2022/248046

(56) References cited:
- JP-A- 2018 002 390
- US-A1- 2018 334 357
- US-A1- 2019 112 152

## Description

### TECHNICAL FIELD

The example and non-limiting embodiments of the present invention relate to monitoring operation of an elevator system.

### BACKGROUND

While recent developments in elevator systems have brought advanced techniques for placing transport requests for transport by an elevator system, a dominant system for placing such transport requests still involves a passenger placing the transport request via operating a user-operable apparatus arranged in a landing that enables access to one or more elevators of the elevator system. Such an apparatus typically comprises a control panel that enables the passenger to enter a transport request in a landing of an origin floor, where the transport request may indicate a requested transport direction (up or down), a destination floor of the requested elevator transport, or simply the passenger's wish to have elevator transport from the origin floor. Such a control panel may comprise, for example, a plurality of user-operable keys or push-buttons or a touch-sensitive element (such as a touchpad or a touchscreen) that enable the passenger to call the elevator to the origin floor, to select the desired transport direction and/or to select the desired destination floor.

The apparatus may further enable access control pertaining to the elevators via usage of a (valid) personal access credential. In this regard, the apparatus may include a reader or receiver for receiving the passenger's personal access credential and, in case of being presented a valid access credential, allowing the passenger to place a transport request using the apparatus. Examples of such access control mechanism include a smartcard reader for reading a smartcard serving as the passenger's personal access credential, a RFID reader for reading a RFID tag serving as the passenger's personal access credential, a fingerprint scanner for reading a fingerprint of the passenger as the passenger's personal access credential, etc.

However, the passenger operating the apparatus in order to place the transport request may fail due to a malfunction or damage of the apparatus and/or due to a failure to operate the apparatus in a correct manner, thereby resulting in a compromised user experience that may require corrective actions to be carried out.

In related art, US 2018/334357 A1 discloses an elevator system that includes a sensor assembly and a controller. The sensor assembly is disposable in or proximate to an elevator lobby and is configured to deduce an intent of an individual in the elevator lobby to board one of one or more elevators and to issue a call signal in response to deducing the intent of the individual to board the one of the elevators. The controller is configured to receive the call signal issued by the sensor assembly and to assign one or more of the elevators to serve the call signal at the elevator lobby.

### SUMMARY

It is an object of the present invention to provide a technique that enables detecting of a failure in operating an apparatus that enables placing transport calls to an elevator system.

According to the invention, a monitoring system for monitoring passenger interaction with one or more control panel apparatuses for placing transport calls to an elevator system in a landing of the elevator system, the monitoring system comprising is provided, the system comprising: one or more cameras arranged for capturing images of passengers on the landing; and an interaction analyzer for determining passenger interaction with the one or more control panel apparatuses, the interaction analyzer arranged to: carry out, based on the respective time series of images received from said one or more cameras, an interaction analysis for determining one or more aspects of passenger interaction with the one or more control panel apparatuses, carry out, based on the determined one or more aspects of passenger interaction with the one or more control panel apparatuses, a failure detection for the one or more control panel apparatuses, and invoke one or more predefined actions in response to detecting a failure that pertains to at least one of the one or more control panel apparatuses.

According to the invention, a control panel apparatus for placing transport calls to an elevator system in a landing of the elevator system is provided, the apparatus comprising: a user input portion for receiving a transport call from a passenger; and a control portion comprising an interaction analyzer for determining passenger interaction with the control panel apparatus, the interaction analyzer arranged to: receive a respective time series of images from one or more cameras arranged for capturing images of passengers on the landing, carry out, based on the respective time series of images received from said one or more cameras, an interaction analysis for determining one or more aspects of passenger interaction with the control panel apparatus, carry out, based on the determined one or more aspects of passenger interaction with the control panel apparatus (130-k), a failure detection for the control panel apparatus, and invoke one or more predefined actions in response to detecting a failure that pertains to the control panel apparatus.

According to the invention, a method for monitoring passenger interaction with one or more control panel apparatuses for placing transport calls to an elevator system in a landing of the elevator system is provided, the method comprising: receiving, in an interaction analyzer, a respective time series of images from one or more cameras arranged for capturing images of passengers on the landing; carrying out, by the interaction analyzer, based on respective time series of images received from said one or more cameras, an interaction analysis for determining one or more aspects of passenger interaction with the one or more control panel apparatuses; carrying out (206), by the interaction analyzer, based on the determined one or more aspects of passenger interaction with the one or more control panel apparatuses (130-k), a failure detection for the one or more control panel apparatuses (130-k); and invoking (208), by the interaction analyzer, one or more predefined actions in response to detecting a failure that pertains to at least one of the one or more control panel apparatuses.

According to the invention, a computer program is provided, the computer program comprising computer readable program code configured to cause performing at least the method according to the example embodiment described in the foregoing when said program code is executed on one or more computing apparatuses.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some logical elements of an elevator system according to an example;
Figure 2 illustrates a block diagram of some elements of the control panel apparatus according to an example;
Figure 3A illustrates passenger movement on a landing of the elevator system according to an example;
Figure 3B illustrates passenger movement on a landing of the elevator system according to an example;
Figure 3C illustrates passenger movement on a landing of the elevator system according to an example;
Figure 4A illustrates passenger movement on a landing of the elevator system according to an example;
Figure 4B illustrates passenger movement on a landing of the elevator system according to an example;
Figure 4C illustrates passenger movement on a landing of the elevator system according to an example;
Figure 5 illustrates a method according to an example, and
Figure 6 illustrates a block diagram of some components of an apparatus according to an example.

### DESCRIPTION OF SOME EMBODIMENTS

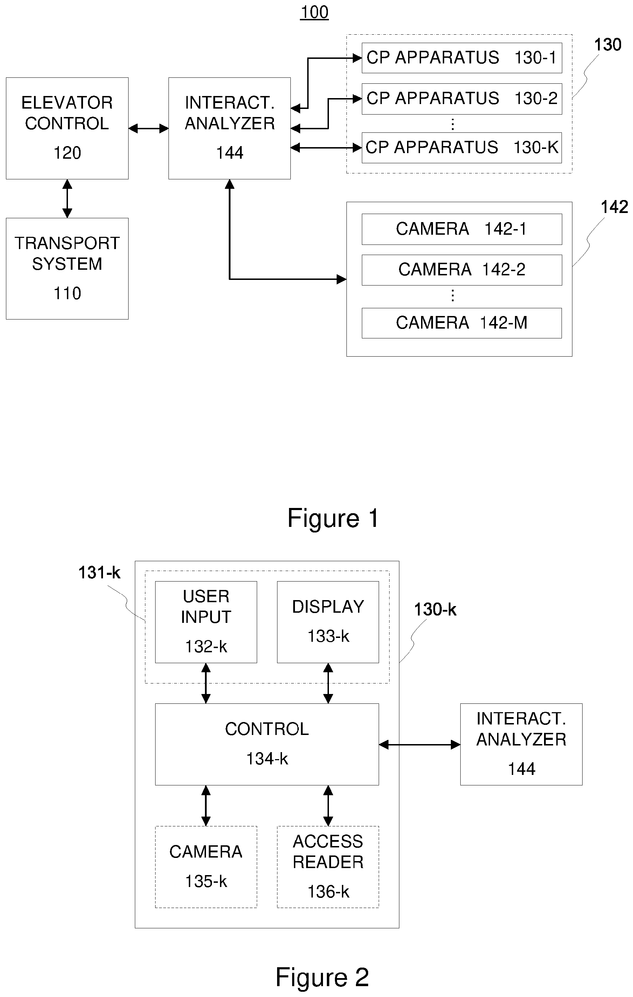

Figure 1 illustrates a block diagram of some elements of an elevator system 100 according to an example. The elevator system 100 is shown in the example Figure 1 with an elevator transport system 110 comprising one or more elevators for transporting passengers and an elevator controller 120 for controlling movement of the one or more elevators in accordance with transport requests originating from passengers wishing to use the elevator system 100. Hence, the elevator transport system 110 is arranged to operate under control of the elevator controller 120 in dependence of transport requests originating from one or more passengers.

Typically, the elevator transport system 110 is installed in a building, which may be residential building, an office building, a public building (such as a library, museum, a sports venue, a station of public transportation, ...), etc. Alternatively, the elevator transport system 110 may be installed to serve a location that is not strictly a building, such as an underground station of public transportation or another venue or place of interest that is offset from the ground level. Regardless of the usage environment of the elevator transport system 110, without losing generality, the elevator system 100 may be considered to serve for transporting passengers between two or more vertically displaced floors or levels, where in each floor/level the area or location for entering or exiting the elevator car(s) of the elevator transport system 110 may be referred to as a respective landing or landing area of the elevator system 100.

**The** elevator system 100 further comprises a plurality of control panel apparatuses 130, represented in the illustration of Figure 1 by control panel apparatuses 130-1, 130-2, ..., 130-K, where any individual control panel apparatus may be referred to via the reference numeral 130-k. Each of the control panel apparatuses 130-k comprises a respective UI that enables a passenger to enter a transport call for elevator transport using an elevator of the elevator transport system 110, whereas the control panel apparatus 130-k may respond to a transport call received via the UI by transmitting a respective transport request to the elevator controller 120. The control panel apparatuses 130-k are typically installed in landings of the elevator system 100 or in close proximity thereof, such that respective one or more control panel apparatuses 130-k are provided in each landing. Due to is role as an apparatus for receiving transport calls from the passengers, the control panel apparatus 130-k may be also referred to as a call-giving apparatus 130-k.

The elevator system 100 may further comprise a monitoring system for monitoring passenger interaction with the plurality of control panel apparatuses 130. The monitoring system comprises a camera system 142 including a plurality of cameras for capturing images of passengers on one or more landings of the elevator system 100, represented in the illustration of Figure 1 by cameras 142-1, 142-2, ..., 142-M, where any individual camera may be referred to via the reference numeral 142-m. The cameras 142-m of the camera system 142 are communicatively coupled to an interaction analyzer 144, which is provided for determining the passenger interaction with the respective control panel apparatuses 130-k via interaction analysis carried out on the images obtained from the camera system 142. Although shown in the example of Figure 1 as an entity separate from the elevator controller 120, in another example the interaction analyzer 144 may be provided as part of the elevator controller 120, whereas in a further example the interaction analyzer 144 may be provided as part of one of the control panel apparatuses 130-k.

In context of the present disclosure, an aspect of interest in relation to the elevator system 100 is the interaction between the passengers and the plurality of control panel apparatuses 130 in landings of the elevator system 100 and, consequently, any aspects related to the structure and operation of the one or more elevators of the elevator transport system 110 and/or those of the elevator controller 120 may be provided using techniques known in the art and, consequently, any details pertaining to their structure and operation are described or referred to herein only to extent they are necessary for describing examples that pertain to monitoring the interaction between the passengers and the plurality of control panel apparatuses 130 in landings of the elevator system 100.

Figure 2 illustrates a block diagram of some elements of the control panel apparatus 130-k according to an example. The control panel apparatus 130-k shown in the example of Figure 2 comprises the UI 131-k and a control portion 134-k, where the UI includes a user input portion 132-k for receiving user input and may further include a display portion 133-k for displaying information to the user. The control panel apparatus 130-k may further comprise a camera 135-k arranged to capture images of passengers operating the control panel apparatus 130-k and/or an access credential reader 136-k for reading respective access credentials of the passengers. Along the lines described in the foregoing, the user input portion 132-k may be arranged to receive a transport call from the user. The user input portion 132-k may comprise one or more user-operable keys or push-buttons and/or a touch-sensitive element (such as a touchpad or a touchscreen) that enable the user to enter the transport call. Depending on type and characteristics of the UI 131-k and the user input portion 132-k thereof, a transport call entered via the UI 131-k may correspond to a transport request of one of the following types:
- a transport request for elevator transport from the certain landing;
- a transport request for elevator transport (from the certain landing) to a direction defined in the transport call;
- a transport request for elevator transport (from the certain landing) to a destination floor defined in the transport call.

Hence, upon receiving the transport call via the UI 131-k, the control panel apparatus 130-k may convert the received transport call into a corresponding transport request for provision to the elevator controller 120. Consequently, elevator controller 120 may process the transport request according to procedures known in the art and, if the elevator system 100 is able to provide the requested elevator transport, employ the elevator transport system 110 to provide the requested elevator transport to the user.

The display portion 133-k, if present in the apparatus 130-k, may be employed to display information that may pertain to the transport call entered by the user via the UI 131-k and/or to operational status of the elevator system 100 or an element thereof. As an example in this regard, the display portion 133-k may be arranged to display an indication of a status of a recently entered transport call. The display portion 133-k may comprise one or more visual indicators arranged to provide the user with feedback concerning the status of the transport request derived based on the transport call entered via the UI. In one example, such one or more visual indicators may comprise one or more indicator lights (e.g. light emitting diodes) that serve to indicate the status of the underlying transport request. In other examples, additionally or alternatively, the display portion 133-k may comprise an electronic visual display or a touchscreen arranged to show one or more symbols or text that serve to indicate the status of the underlying transport request. In this regard, an indication of the status of the transport call may convey one or more of the following pieces of information: an indication of a successfully placed transport request, a direction of successfully placed transport request, a destination floor of a successfully placed transport request, an indication of an unsuccessful transport call, etc.

The control portion 134 may control at least some aspects of operation of the user input portion 132-k and the display portion 133-k (if included in the UI 131-k). The control portion 134 may be arranged to convert the transport call received via the user input portion 132-k to the corresponding transport request and transfer the transport request to the elevator controller 120. The elevator controller 120 may register the transport request and it may send an acknowledgement in this regard to the control panel apparatus 130-k (indicating e.g. a successfully registered transport request or a failure to register the transport request). The control portion 134 may be further arranged control operation of the display portion (if included in the UI 131-k) to display the indication of the status of the transport call, which may represent the transport call as received via the user input portion 132-k or which may (further) reflect the acknowledgement received from the elevator controller 120. Moreover, the control portion 134-k may further control the display portion 133 to display other information that pertains to the operational status of the elevator system 100 or an element thereof. As an example of such other information, the control portion 134-k may control the display portion 133 to display an indication of an operational status of the control panel apparatus 130-k or an element thereof.

In case the camera 135-k is included in the control panel apparatus 130-k, the control portion 134-k may further control at least some aspects of operation of the camera 135-k and/or control data transfer between the camera 135-k and the interaction analyzer 144. In case the access credential reader 136-k is included in the control panel apparatus 130-k, the control portion 134-k may further control at least some aspects of operation of the access credential reader 136-k and/or control data transfer between the access control reader 136-k and an external entity (e.g. the elevator controller 120) to facilitate providing access control in the framework of the elevator system 100. Moreover, as described in the foregoing, in some examples the control panel apparatus 130-k may include the interaction analyzer 144, e.g. such that the control portion 134-k comprises the interaction analyzer 144 or such that the control portion 134-k implements at least some aspects of the functionality described for the interaction analyzer 144 in the present disclosure.

The control portion 134-k may comprise a processor arranged to execute a computer program stored in a memory provided in the control panel apparatus 130-k (e.g. in the control portion 134-k), the execution of the computer program thereby causing the computer apparatus to provide at least some aspects of operation of the control portion 134-k. In particular, at least some aspects of operation of the control panel apparatus 130-k described in the present disclosure may arise from execution of the above-described computer program by the processor. The control panel apparatus 130-k may be communicatively coupled to the interaction analyzer 144 and/or to the elevator controller 120 or it may be able to establish a communicative coupling to the interaction analyzer 144 and/or to the elevator controller 120 when needed. The communicative couplings in this regard may be provided, for example, via a wired or wireless communication network or communication link.

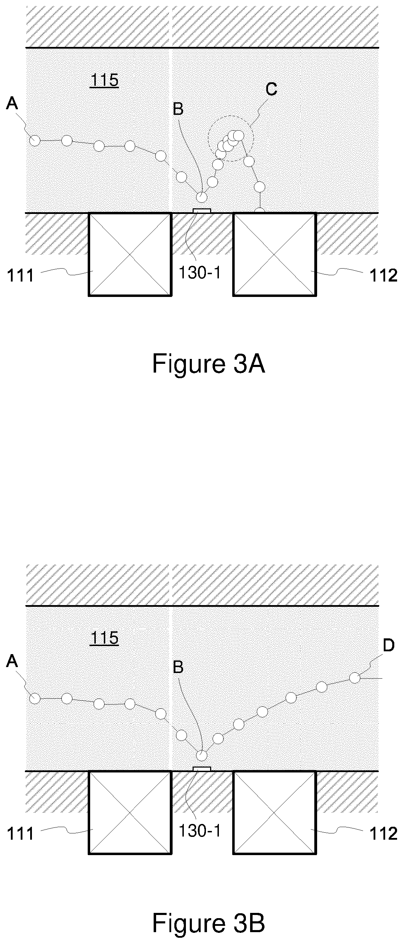

Before describing the interaction analysis carried out by the monitoring system in further detail, non-limiting illustrative examples of passenger interaction with one or more control panel apparatuses 130-k on a landing of the elevator system 100 are provided. As an example in this regard, Figure 3A schematically illustrates a landing 115 that enables accessing elevators 111 and 112 of the elevator system 100 and that is provided with a first control panel apparatus 130-1. Therein, movement of a certain passenger is illustrated by a passenger track represented by a sequence of small circles where adjacent circles are connected to each other by respective lines. In the example of Figure 3A, the passenger track corresponds to the certain passenger arriving at the landing 115 in a location A, proceeding to a location B to enter a transport call for transport using one of the elevators 111 and 112 via operating the first control panel apparatus 130-1, proceeding further to a group of locations C to wait for the one of elevators 111, 112 to arrive at the landing 115, and proceeding still further to the elevator 111, 112 that is the first arrive at the landing 115, which in this example is the elevator 112.

While the example of Figure 3A represents expected passenger interaction with the one or more control panel apparatuses 130-k on the landing 115, Figure 3B illustrates another example that may be considered to represent anomalous (e.g. unexpected) passenger interaction with the one or more control panel apparatuses 130-k on the landing 115. In the example of Figure 3B, the certain passenger again arrives at the landing 115 at the location A, continues to the location B to enter the transport call using the control panel apparatus 130-1, after which the certain passenger moves on to a location D and onwards from the landing 115 e.g. to find another means of transportation to his/her destination floor, such as a further elevator, an escalator, stairs, etc. Hence, in this example the passenger interaction with the one or more control panel apparatuses 130-k is anomalous in that the passenger failed to enter the transport call via the control panel apparatus 130-1.

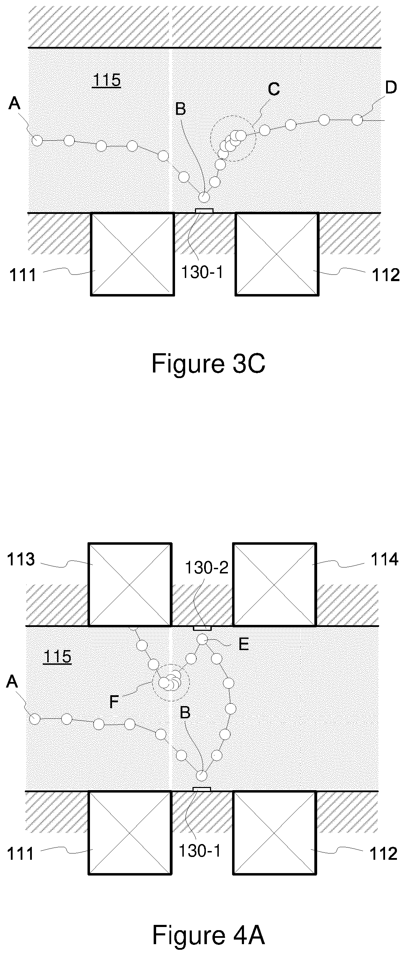

Figure 3C represents a variation of the example of Figure 3B, where the certain passenger arrives at the landing 115 at the location A, continues to the location B to enter the transport call using the control panel apparatus 130-1 and proceeds to the group of locations C to wait for the one of elevators 111, 112 to arrive at the landing 115. As a difference to the example of Figure 3A, neither of the elevators 111, 112 arrives at the landing 115, resulting in the certain passenger moving on to a location D and onwards from the landing 115 e.g. to find another means of transportation to his/her destination floor, such as a further elevator, an escalator, stairs, etc. Hence, in this example the passenger interaction with the one or more control panel apparatuses 130-k is anomalous in that the elevator system 100 failed to provide the certain passenger with the requested elevator transport despite the transport call entered or attempted by the certain user.

Figure 4A represents another example of anomalous passenger interaction with the one or more control panel apparatuses 130-k on the landing 115. In this example, the landing 115 further enables access to elevators 113 and 114 and is provided with a second control panel apparatus 130-2. In the example of Figure 4A, the certain passenger proceeds via the location A to the location B to enter a first transport call for transport using one of the elevators 111, 112, 113 and 114 via operating the first control panel apparatus 130-1 but proceeds further to a location E to enter a second transport call for transport using one of the elevators 111, 112, 113 and 114 via operating the second control panel apparatus 130-2, continues to a group of locations F to wait for the one of elevators 111, 112, 113, 114 to arrive at the landing 115, and proceeds still further to the elevator 111, 112, 113, 114 that is the first arrive at the landing 115, which in this example is the elevator 113. Hence, in this example the passenger interaction with the one or more control panel apparatuses 130-k is anomalous in that the passenger failed to enter the transport call via the first control panel apparatus 130-1 whereas the second transport call entered via the second control panel apparatus 130-2 was successful.

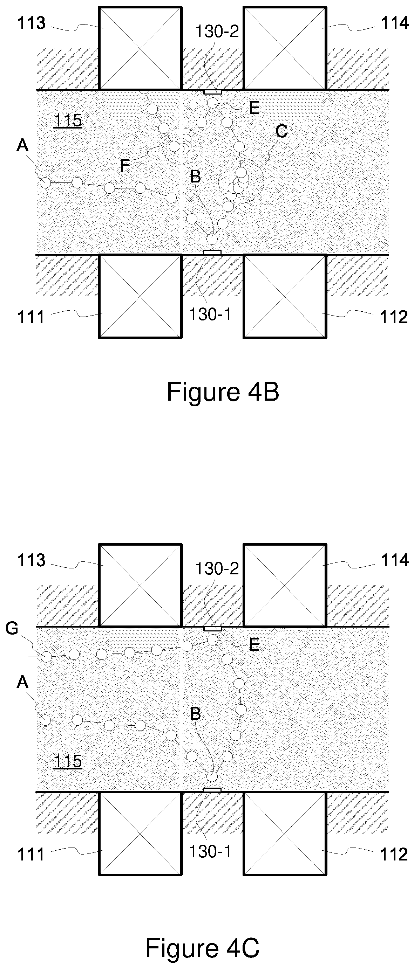

Figure 4B represents a variation of the example of Figure 4A, where the certain passenger arrives at the landing 115 at the location A, continues to the location B to enter the transport call using the first control panel apparatus 130-1 and proceeds to the group of locations C to wait for the one of elevators 111, 112, 113, 114 to arrive at the landing 115. After having waited for a while in the group of locations C, the certain passenger moves on the location E to enter the second transport call for transport using one of the elevators 111, 112, 113 and 114 via operating the second control panel apparatus 130-2, continues to a group of locations F to wait for the one of elevators 111, 112, 113, 114 to arrive at the landing 115, and proceeds still further to the elevator 111, 112, 113, 114 that is the first arrive at the landing 115, which in this example is the elevator 113. Hence, in this example the passenger interaction with the one or more control panel apparatuses 130-k is anomalous in that the first transport call entered via the first control panel apparatus 130-1 failed to result in the elevator system 100 providing the certain passenger with the requested elevator transport whereas the second transport call entered via the second control panel apparatus 130-2 was successful.

Figure 4C represents a further example of anomalous passenger interaction with the one or more control panel apparatuses 130-k on the landing 115 that enables access to the elevators 111, 112, 113 and 114. Therein, the certain passenger proceeds (as in the example of Figure 4A) from the location A to the location B to enter the first transport call via the first control panel apparatus 130-1 but proceeds further to the location E to enter the second transport call via the second control panel apparatus 130-2 and continues yet further to a location G and onwards from the landing 115 e.g. to find another means of transportation to his/her destination floor, such as a further elevator, an escalator, stairs, etc. Hence, in this example the passenger interaction with the one or more control panel apparatuses 130-k is anomalous in that the passenger failed to enter the transport call via both via the first control panel apparatus 130-1 and via the second control panel apparatus 130-2.

In a variation of the example of Figure 4C the certain passenger may proceed from the location B to the location F via the group of locations C (as e.g. in the example of Figure 4B) and/or the certain passenger may proceed from the location E to the location G (and onwards) via the group of locations F (described in the example of Figure 4B), respectively, due to a failure in the elevator system 100 providing the requested transport in response to the first transport call and/or in response to the second transport call.

Referring back to the monitoring system, the cameras 142-m of the camera system 142 are arranged in respective locations with respect to the one or more landings of the elevator system 100 that are observed via the monitoring system. Hence, each landing under observation may be provided with respective one or more cameras 142-m arranged for capturing images of passengers on the respective landing, where the one or more cameras 142-m may be mounted, for example, on one or more walls or in a ceiling in the respective the landing. Each of the plurality of cameras 142-m may be arranged to provide the respective time series of images (e.g. a respective video stream) to the interaction analyzer 144 for processing therein. In the following, operation of the monitoring system is described via an example that pertains to respective one or more cameras 142-m arranged to capture images of passengers on the landing 115 of the elevator system 100 (i.e. in a single landing) and the interaction analyzer 144 processing image data pertaining to the landing 115, while this example readily generalizes into carrying out the corresponding procedure for a plurality of landings of the elevator system 100.

The processing of image data pertaining to the landing 115 in the interaction analyzer 144 may comprise carrying out, based on the respective time series of images obtained from the cameras 142-m arranged for capturing images of passengers on the landing 115, the interaction analysis in order to determine one or more aspects of passenger interaction with the one or more control panel apparatuses 130-k on the landing 115. Moreover, the processing in the interaction analyzer 144 may further comprise carrying out, based on the one or more aspects of passenger interaction with the one or more control panel apparatuses 130-k on the landing 115, a failure detection and invoking one or more predefined actions in response to detecting a failure pertaining to at least one of the one or more control panel apparatuses 115 provided in the landing 115.

Along the lines described in the foregoing, the interaction analysis pertaining to the landing 115 may be based on the respective time series of images originating from the one or more cameras 142-m arranged to capture images of the passengers on the landing 115. The interaction analysis may comprise passenger movement analysis that aims at determining, for one or more passengers, respective passenger movement with respect to the one or more control panel apparatuses 130-k on the landing 115 via image analysis carried out on the respective time series of images originating from the one or more cameras 142-m arranged to capture images of the passengers on the landing 115. In terms of tracking movement of a certain passenger, the interaction analysis may comprise identifying, via the image analysis, the respective passenger in a plurality of images under consideration and determining movement of the respective passenger on the landing 115 based on her/his positions in said images. In this regard, a suitable image analysis technique known in the art may be applied.

In particular, the passenger movement analysis may comprise identifying respective one or more aspects of anomalous passenger movement with respect to one or more control panel apparatuses 130-k provided in the landing 115. In this regard, identifying one or more aspects of anomalous passenger movement with respect to a certain control panel apparatus 130-k in the landing 115 for a certain passenger may comprise one or more of the following:
- Determining that the respective passenger has accessed the respective control panel apparatus 130-k in the landing 115 but has exited the landing 115 without entering an elevator therefrom. This determination corresponds to scenarios where the certain passenger may have attempted to enter the transport using the only control panel apparatus 130-k available in the certain landing without being provided with elevator transport, e.g. as in the examples of Figures 3B, 3C and 4C.
- Determining that the respective passenger has accessed another control panel apparatus 130-k in the landing 115 after having accessed the respective control panel apparatus 130-k in the landing 115. In this scenario, the certain passenger may or may not enter one of the elevators from the landing 115 after having accessed the other control panel apparatus 130-k, while it nevertheless suggests that the attempt to enter the transport call via the certain control panel apparatus 130-k was likely not successful. This determination corresponds e.g. to scenarios described above with references to Figures 4A, 4B and 4C.

Hence, each time a passenger is found to demonstrate at least one aspect of anomalous passenger movement with respect to the one or more control panel apparatuses 130-k provided in the landing 115 may considered to represent a (single) occasion of anomalous passenger movement with respect to the respective control panel apparatus 130-k in the landing 115. In contrast, the certain passenger accessing only a single control panel apparatus 130-k in the landing and subsequently entering one of the elevators from the landing 115 may be considered as expected passenger movement, e.g. as described above with references to Figure 3A.

In a non-limiting example, identification of one or more aspects of anomalous passenger movement with respect to a certain control panel apparatus 130-k may rely on a machine learning technique, such as an artificial neural network (ANN). In this regard, the ANN may be trained, e.g. via supervised learning, to distinguish the one or more aspects of anomalous passenger movement with respect to the control panel apparatus 130-k from expected passenger movement with respect to the control panel apparatus 130-k via usage of a set of training items that includes a first plurality of training items that represent expected passenger movement with respect to the control panel apparatus 130-k and a second plurality of training items that represent the one or more aspects of anomalous passenger movement with respect to the control panel apparatus 130-k. In this regard, the ANN may be trained e.g. upon installing or configuring the monitoring system, whereas the interaction analyzer 144 may apply the ANN in the course of its operation to identify the one or more aspects of anomalous passenger movement with respect to the control panel apparatus 130-k. Herein, the learning and the subsequent application of the ANN may rely, for example, directly on the respective time series of images originating from the one or more cameras 142-m or they may rely on respective time series of passenger positions extracted (via image analysis) based on the time series of images originating from the one or more cameras 142-m. The interaction analyzer 144 may carry out the above-described passenger movement analysis for a plurality of passengers and for one or more control panel apparatuses 130-k in the landing 115 based on image data that represents passenger movement on the landing 115 during a specified time period, which may be referred to as a monitoring period. The duration of the monitoring period may be a suitable value chosen, for example, from a range from a few minutes to several hours, e.g. one hour, and the monitoring period may be repeated according to a predefined schedule, e.g. at predefined time intervals, in the course of operation of the elevator system 100.

Consequently, the interaction analyzer 144 may carry out a failure detection for the one or more control panel apparatuses 130-k in the landing based on the determined one or more aspects of anomalous passenger movement with respect to the one or more control panel apparatuses 130-k in the landing 115, i.e. based on the outcome of the passenger movement analysis. In the following, some aspects of the failure detection are described in view of a single control panel apparatus 130-k in the landing 115, while the description readily generalizes into carrying out the corresponding failure detection procedure for one or more control panel apparatuses 130-k in one or more landings of the elevator system 100.

The failure detection may involve detecting a failure pertaining to a certain control panel apparatuses 130-k provided in the landing 115 in response to an amount of occasions representing anomalous passenger movement that pertain to the respective control panel apparatus 130-k on the landing 115 during the monitoring period exceeds a predefined threshold. In an example, this may comprise detecting a failure in response to the number of occasions representing anomalous passenger movement with respect to the respective control panel apparatus 130-k in the landing 115 during the monitoring period exceeding a (first) predefined threshold value, whereas in another example a failure may be detected in response to the number of occasions representing anomalous passenger movement with respect to the respective control panel apparatus 130-k in the landing 115 during the monitoring period in relation to the overall number of passengers observed in the landing 115 during the monitoring period exceeding a (second) predefined threshold value.

In other words, the failure detection aims at identifying a scenario where a high number of passengers visit the location of the certain control panel apparatus 130-k in the landing 115 without successfully entering a transport call. Even though some of the visits to the location of the certain control panel apparatus 130-k in the landing may not actually involve an attempt to place a transport call, a majority of such passenger movement nevertheless highly likely relates to using the certain control panel apparatus 130-k to place a transport call to the elevator system 100. Consequently, the failure detection facilitates identifying situations where the certain control panel apparatus 130-k is malfunctioning or completely out of order, as well as situations where the certain control panel apparatus 130-k otherwise in such a condition (e.g. dirty) that the passenger cannot or will not operate it.

As described in the foregoing, the interaction analyzer 144 may respond to a detected failure by invoking one or more predefined actions, which may include, for example, one or more of the following:
- control the certain control panel apparatus 130-k in the landing 115 to display, via the display portion 133-k therein, an indication of a failure condition;
- control the certain control panel apparatus 130-k in the landing 115 to display, via the display portion 133-k therein, a guidance to another control panel apparatus in the landing 115;
- at least partially disable operation of the certain control panel apparatus 130-k in the landing 115;
- issue a maintenance ticket or a maintenance call pertaining to the certain control panel apparatus 130-k in the landing 115;
- report the failure to the elevator controller 120, which may take care of issuing the maintenance ticket or the maintenance call.

The monitoring system described in the following relies on the plurality of cameras 142-m that are physically separate from the control panel apparatuses 130-k, while both the cameras 142-m and the plurality of control panel apparatuses 130 are integrated to the elevator system 100 via respective couplings to the elevator controller 120. In another example, monitoring of passenger behavior with respect to respective one or more control panel apparatuses 130-k in one or more landings of the elevator system 100 may rely on the respective cameras 135-k of the control panel apparatuses 135-k instead. In such an arrangement the camera system 142 may be omitted while in such an arrangement the monitoring system may comprise the cameras 135-k and the interaction analyzer 144. Consequently, the respective control portions 134-k of at least some of the control panel apparatuses 130-k may provide the respective time series of images captured using the respective camera 135-k therein to the interaction analyzer 144, which may carry out the interaction analysis and the failure detection as described in the foregoing based on the time series of images originating from the cameras 135-k, *mutatis mutandis.*

In a further example, both the cameras 142-m of the camera system 142 and the respective cameras 135-k of the plurality of control panel apparatuses 130-k may be applied in monitoring the passenger behavior with respect to respective one or more control panel apparatuses 130-k in one or more landings of the elevator system 100. In such an arrangement the monitoring system may comprise the cameras 135-k, the cameras 142-m and the interaction analyzer 144. In such an arrangement the respective control portions 134-k of at least some of the control panel apparatuses 130-k may provide the respective time series of images captured using the respective camera 135-k therein to the interaction analyzer 144, which may carry out the interaction analysis and the failure detection as described in the foregoing based on the respective time series of images originating from the cameras 142-m and from the cameras 135-k, *mutatis mutandis.*

Referring back to the access credential reader 136-k that may be included in the control panel apparatus 130-k, the elevator system 100 may require a passenger to present a valid access credential before being allowed to enter a transport call via the UI 131-k of the control panel apparatus 130-k or to otherwise operate the control panel apparatus 130-k. **In** a non-limiting example in this regard, the access credential may comprise a smartcard encoded with access information assigned to a respective passenger and the access credential reader 136-k may comprise a smartcard reader, whereas in another example the access credential may comprise a **RFID** tag encoded with access information assigned to a respective passenger and the access credential reader 136-k may comprise a RFID reader. In a further example, the access credential may comprise a fingerprint of the passenger while the access credential reader 136-k may comprise a fingerprint scanner.

In such an arrangement, the interaction analyzer 144 may be provided in the control panel apparatus 130-k, e.g. such that the interaction analyzer 144 may be included in the control portion 134-k or such that the functionality of the interaction analyzer 144 is otherwise provided by the control portion 134-k. Moreover, in such an arrangement the interaction analysis may be carried out based on the time series of images originating from the camera 135-k and/or based on respective time series of images originating from one or more of the cameras 142-m while the interaction analysis may comprise determining one or more aspects that characterize interaction between the access information reader 136-k and an access credential of a passenger upon the passenger attempting to use her/his access credential to operate the control panel apparatus 130-k. Consequently, the failure detection by the interaction analyzer 144 may be carried out on basis of the one or more aspects that characterize the interaction between the access information reader 136-k and an access credential of a passenger and it may involve detecting a failure in the interaction pertaining to the control panel apparatus 130-k in response to identifying a deficient interaction between the access information reader 136-k and an access credential of the passenger upon the passenger applying the access credential in order to operate the control panel apparatus 130-k, wherein the interaction may be considered as deficient one on view of one or more predefined criteria.

According to an example, the one or more aspects that characterize the interaction between the access information reader 136-k and an access credential of a passenger may comprise a distance between the access credential and the access credential reader 136-k upon the passenger applying the access credential to access the elevator system 100. Consequently, a deficient interaction may be identified in response to the distance between the access credential and the access credential reader 136-k exceeding a predefined threshold distance.

According to another example, additionally or alternatively, the one or more aspects that characterize the interaction between the access information reader 136-k and an access credential of a passenger may comprise a duration of interaction between the access credential and the access credential reader 136-k. Consequently, a deficient interaction may be identified in response to the duration of interaction being below a predefined threshold duration.

According to a further example, additionally or alternatively, the one or more aspects that characterize the interaction between the access information reader 136-k and an access credential of a passenger may comprise a movement speed of the access credential with respect to the access credential reader 136-k. Consequently, a deficient interaction may be identified in response to the movement speed exceeding a predefined threshold speed.

Along the lines described in the foregoing for the analysis of passenger movement with respect to the one or more control panel apparatuses 130-k on the landing 115, the interaction analysis that aims at determining one or more aspects that characterize interaction between the access information reader 136-k and an access credential of a passenger upon the passenger attempting to use her/his access credential to operate the control panel apparatus 130-k may rely on an image analysis technique known in the art. Moreover, also in this scenario the image analysis may rely on a machine learning technique such as an ANN with supervised learning, whereas in this scenario the ANN may be trained to distinguish deficient interaction between the access information reader 136-k and an access credential of the passenger from regular one via usage of a set of training items that includes a first plurality of training items that represent regular interaction between the access information reader 136-k and an access credential of the passenger and a second plurality of training items that represent deficient interaction between the access information reader 136-k and an access credential of the passenger. **In** this regard, the ANN may be trained e.g. upon installing or configuring the monitoring system, whereas the interaction analyzer 144 may apply the ANN in the course of its operation to identify deficient interaction between the access information reader 136-k and an access credential of the passenger. Herein, the learning and the subsequent application of the ANN may rely, for example, directly on the respective time series of images originating from the one or more cameras 135-k or they may rely on respective time series of access credential positions extracted (via image analysis) based on the time series of images originating from the one or more cameras 135-k.

In case the failure detection results in identifying a deficient interaction between the access information reader 136-k and the access credential of the passenger, the interaction controller 144 may respond by invoking one or more predefined actions, for example one or more of the following:
- control the control panel apparatus 130-k to display, via the display portion 133-k therein, an indication of a deficient interaction between the access information reader 136-k and the access credential of the passenger, where the indication may include an indication of deficient interaction having been identified;
- control the control panel apparatus 130-k to display, via the display portion 133-k therein, a characterization of a deficient interaction between the access information reader 136-k and the access credential of the passenger, where the characterization may indicate the type of identified deficiency.

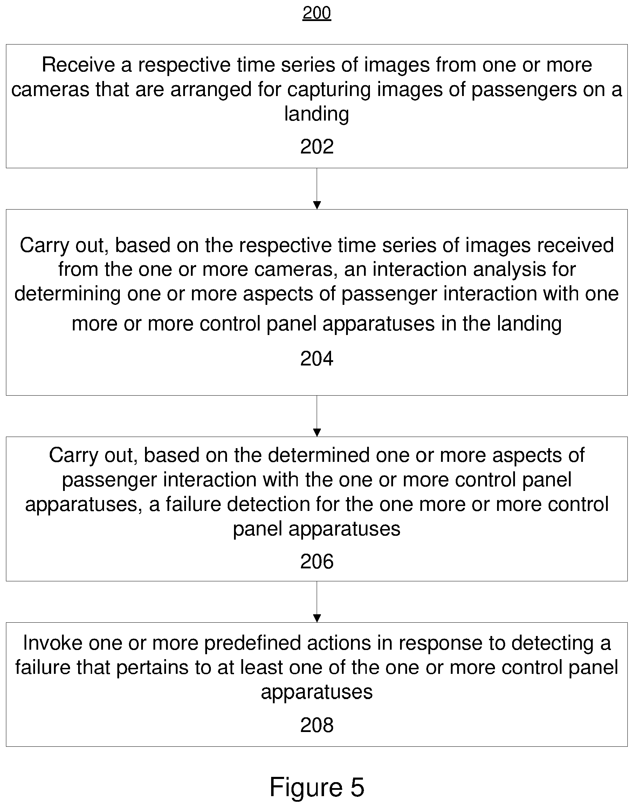

The operation described in the foregoing with references to the monitoring system and/or the interaction analyzer 144 therein may be, alternatively, described as steps of a method. As an example in this regard, Figure 5 depicts a flowchart illustrating a method 200, which may be carried out e.g. by the interaction analyzer 144, by the elevator controller 120 or by the control portion 134-k or another element in one of the control panel apparatuses 130-k. The method 200 may be considered as one provided for monitoring passenger interaction with the one or more control panel apparatuses 130-k for placing transport calls to the elevator system 100 that are arranged in the landing 115 of the elevator system 100 and the method 200 proceeds from receiving a respective time series of images from the one or more cameras 135-k, 142-m that are arranged for capturing images of passengers on the landing 115, as indicated in block 202. The method 200 further comprises carrying out, based on the respective time series of images received from the one or more cameras 135-k, 142-m, an interaction analysis for determining one or more aspects of passenger interaction with the one or more control panel apparatuses 130-k provided in the landing 115, as indicated in block 206, and carrying out, based on the determined one or more aspects of passenger interaction with the one or more control panel apparatuses 130-k, a failure detection for the one or more control panel apparatuses 130-k, as indicated in block 206. The method 200 further comprises invoking one or more predefined actions in response to detecting a failure that pertains to at least one of the one or more control panel apparatuses 130-k, as indicated in block 208.

Respective operations described with references to blocks 202 and 208 pertaining to the method 200 may be implemented, varied and/or complemented in a number of ways, for example as described with references to the monitoring system throughout the present disclosure.

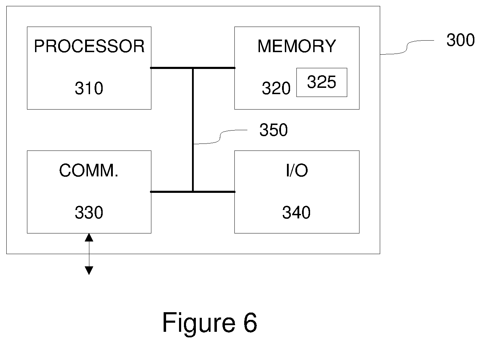

Figure 6 illustrates a block diagram of some components of an apparatus 300 that may be employed to implement operations described in the foregoing with references to the monitoring system. The apparatus 300 comprises a processor 310 and a memory 320. The memory 320 may store data and computer program code 325. The apparatus 300 may further comprise communication means 330 for wired or wireless communication with other apparatuses and/or user I/O (input/output) components 340 that may be arranged, together with the processor 310 and a portion of the computer program code 325, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the monitoring system described in the foregoing. The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the monitoring system described in the foregoing when loaded into the processor 310. As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the monitoring system described in the foregoing. Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the monitoring system described in the foregoing.

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the monitoring system described in the foregoing. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. A method (200) for monitoring passenger interaction with one or more control panel apparatuses (130-k) for placing transport calls to an elevator system (100) in a landing (115) of the elevator system (100),
**characterized in that** the method (200) comprises:
receiving (202), in an interaction analyzer (144), a respective time series of images from one or more cameras (135-k, 142-m) arranged for capturing images of passengers on the landing (115);
carrying out (204), by the interaction analyzer (144), based on respective time series of images received from said one or more cameras (135-k, 142-m), an interaction analysis for determining one or more aspects of passenger interaction with the one or more control panel apparatuses (130-k);
carrying out (206), by the interaction analyzer (144), based on the determined one or more aspects of passenger interaction with the one or more control panel apparatuses (130-k), a failure detection for the one or more control panel apparatuses (130-k); and
invoking (208), by the interaction analyzer (144), one or more predefined actions in response to detecting a failure that pertains to at least one of the one or more control panel apparatuses (130-k).

2. A method (200) according to claim 1, wherein said one or more cameras (135-k, 142-m) comprise one or more of the following:
a camera system (142) comprising one or more cameras (142-m) arranged to capture images of passenger in the landing (115),
respective cameras (135-k) included in the one or more control panel apparatuses (130-k) arranged in the landing (115), said cameras (135-k) arranged to capture images of passengers operating the respective control panel apparatus (130-k).

3. A method (200) according to claim 1 or 2,
wherein the interaction analysis comprises identifying, for said one or more control panel apparatuses (130-k), one or more aspects of anomalous passenger movement with respect to a respective one of the one or more control panel apparatuses (130-k), and
wherein the failure detection comprises detecting a failure that pertains to the respective one of the one or more control panel apparatuses (130-k) in response to an amount of occasions that represent anomalous passenger movement with respect to the respective one of the one or more control panel apparatuses (130-k) exceeding a predefined threshold.

4. A method (200) according to claim 3, wherein identifying the one or more aspects of anomalous passenger movement with respect to the respective one of the one or more control panel apparatuses (130-k) for a respective passenger comprises one or more of the following:
determining that the respective passenger has accessed the respective one of the one or more control panel apparatuses (130-k) but has exited the landing (115) without entering an elevator of the elevator system (100) therefrom,
determining that the respective passenger has accessed another one of the one or more control panel apparatuses (130-k) after having accessed the respective one of the one or more control panel apparatuses (130-k).

5. A method (200) according to any of claims 1 to 4, comprising invoking one or more of the following actions in response to detecting a failure that pertains to a certain one of the one or more control panel apparatuses (130-k):
control the respective one of the one or more control panel apparatuses (130-k) to display, via a display portion (133-k) therein, an indication of the detected failure,
control the respective one of the one or more control panel apparatuses (130-k) to display, via the display portion (133-k) therein, a guidance to another one of the one or more control panel apparatuses (130-k),
at least partially disable operation of the respective one of the one or more control panel apparatuses (130-k),
issue a maintenance call that pertains to the respective one of the one or more control panel apparatuses (130-k),
report the detected failure to an elevator controller (120) of the elevator system (100).

6. A method (200) according to any of claims 1 to 4,
wherein the interaction analysis comprises determining, for the one or more control panel apparatuses (130-k), one or more aspects that characterize an interaction between an access credential reader (136-k) in a respective one of the one or more control panel apparatuses (130-k) and an access credential of a passenger upon the passenger applying the access credential in order to operate the respective one of the one or more control panel apparatuses (130-k), and
wherein the failure detection comprises detecting a failure that pertains to the respective one of the one or more control panel apparatuses (130-k) in response to the one or more aspects that characterize said interaction indicating a deficient interaction in view of one or more predefined criteria.

7. A method (200) according to claim 6, wherein at least one of the following applies:
the one or more aspects that characterize said interaction comprise a distance between the access credential and the access credential reader (136-k) upon the passenger applying the access credential and the failure detection comprises identifying deficient interaction in response to the distance between the access credential and the access credential reader (136-k) exceeding a predefined threshold distance;
the one or more aspects that characterize said interaction comprise a duration of interaction between the access credential and the access credential reader (136-k) upon the passenger applying the access credential and the failure detection comprises identifying deficient interaction in response to the duration of the interaction between the access credential and the access credential reader (136-k) being below a predefined threshold duration;
the one or more aspects that characterize said interaction comprise a movement speed of the access credential with respect to the access credential reader (136-k) upon the passenger applying the access credential and the failure detection comprises identifying deficient interaction in response to the movement speed of the access credential with respect to the access credential reader (136-k) exceeding a predefined threshold speed.

8. A method (200) according to claim 6 or 7, further comprising invoking one or more of the following actions in response to identifying deficient interaction between the respective access information reader (136-k) and the access credential of the passenger:
control the respective one of the one or more control panel apparatuses (130-k) to display, via a display portion (133-k) therein, an indication of a deficient interaction between the respective access information reader (136-k) and the access credential of the passenger;
control the respective one of the one or more control panel apparatuses (130-k) to display, via a display portion (133-k) therein, a characterization of a deficient interaction between the respective access information reader (136-k) and the access credential of the passenger, wherein the characterization indicates the type of deficiency.

9. A monitoring system for monitoring passenger interaction with one or more control panel apparatuses (130-k) for placing transport calls to an elevator system (100) in a landing (115) of the elevator system (100),
**characterized in that** the monitoring system comprises:
one or more cameras (135-k, 142-m) arranged for capturing images of passengers on the landing (115); and
an interaction analyzer (144) for determining passenger interaction with the one or more control panel apparatuses (130-k), the interaction analyzer arranged to:
carry out, based on the respective time series of images received from said one or more cameras (135-k, 142-m), an interaction analysis for determining one or more aspects of passenger interaction with the one or more control panel apparatuses (130-k),
carry out, based on the determined one or more aspects of passenger interaction with the one or more control panel apparatuses (130-k), a failure detection for the one or more control panel apparatuses (130-k), and
invoke one or more predefined actions in response to detecting a failure that pertains to at least one of the one or more control panel apparatuses (130-k).

10. A monitoring system according to claim 9,
wherein the interaction analysis comprises identifying, for said one or more control panel apparatuses (130-k), one or more aspects of anomalous passenger movement with respect to a respective one of the one or more control panel apparatuses (130-k), and
wherein the failure detection comprises detecting a failure that pertains to the respective one of the one or more control panel apparatuses (130-k) in response to an amount of occasions that represent anomalous passenger movement with respect to the respective one of the one or more control panel apparatuses (130-k) exceeding a predefined threshold.

11. A monitoring system according to claim 9 or 10,
wherein the interaction analysis comprises determining, for the one or more control panel apparatuses (130-k), one or more aspects that characterize an interaction between an access credential reader (136-k) in a respective one of the one or more control panel apparatuses (130-k) and an access credential of a passenger upon the passenger applying the access credential in order to operate the respective one of the one or more control panel apparatuses (130-k),
wherein the failure detection comprises detecting a failure that pertains to the respective one of the one or more control panel apparatuses (130-k) in response to the one or more aspects that characterize said interaction indicating a deficient interaction in view of one or more predefined criteria.

12. A control panel apparatus (130-k) for placing transport calls to an elevator system (100) in a landing (115) of the elevator system (100),
**characterized in that** the control panel apparatus (130-k) comprises:
a user input portion (132-k) for receiving a transport call from a passenger; and
a control portion (134-k) comprising an interaction analyzer (144) for determining passenger interaction with the control panel apparatus (130-k), the interaction analyzer (144) arranged to:
receive a respective time series of images from one or more cameras (135-k, 142-m) arranged for capturing images of passengers on the landing (115),
carry out, based on the respective time series of images received from said one or more cameras (135-k, 142-m), an interaction analysis for determining one or more aspects of passenger interaction with the control panel apparatus (130-k),
carry out, based on the determined one or more aspects of passenger interaction with the control panel apparatus (130-k), a failure detection for the control panel apparatus (130-k), and
invoke one or more predefined actions in response to detecting a failure that pertains to the control panel apparatus (130-k).

13. A control panel apparatus (130-k) according to claim 12, further comprising a display portion (133-k) for displaying information to the passenger, wherein the interaction analyzer (144) is arranged to invoke one or more of the following actions in response to detecting a failure that pertains to the control panel apparatus (130-k):
control the display portion (133-k) to display an indication of the detected failure,
control the display portion (133-k) to display a guidance to another one of the one or more control panel apparatuses (130-k).

14. A control panel apparatus (130-k) according to claim 12 or 13, further comprising a camera (135-k) arranged for capturing the respective time series of images of passenger operating the control panel apparatus (130-k).

15. A computer program comprising computer readable program code configured to cause performing of the method according to any of claims 1 to 8 when said program code is run on a computing apparatus.

## Patentansprüche

1. Verfahren (200) zum Überwachen einer Passagierinteraktion mit einer oder mehreren Bedienfeldeinrichtungen (130-k) zum Eingeben einer Beförderungsanforderung in ein Aufzugssystem (100) an einer Station (115) des Aufzugssystems (100),
**dadurch gekennzeichnet, dass** das Verfahren (200) umfasst:
Empfangen (202), in einem Interaktionsanalysator (144), einer entsprechenden Zeitreihe von Bildern von einer oder mehreren Kameras (135-k, 142-m), die ausgelegt sind zum Aufnehmen von Bildern von Passagieren an der Station (115);
Ausführen (204), durch den Interaktionsanalysator (144), basierend auf den entsprechenden Zeitreihen von Bildern, die von der einen oder den mehreren Kameras (135-k, 142-m) empfangen werden, einer Interaktionsanalyse zum Ermitteln eines oder mehrerer Aspekte der Passagierinteraktion mit der einen oder den mehreren Bedienfeldeinrichtungen (130-k);
Ausführen (206), durch den Interaktionsanalysator (144), basierend auf dem einen oder den mehreren ermittelten Aspekten der Passagierinteraktion mit der einen oder den mehreren Bedienfeldeinrichtungen (130-k), einer Fehlererkennung für die eine oder mehreren Bedienfeldeinrichtungen (130-k); und
Aufrufen (208), durch den Interaktionsanalysator (144), einer oder mehrerer vordefinierter Aktionen als Reaktion auf ein Erkennen eines Fehlers, der zu mindestens einem der einen oder den mehreren Bedienfeldeinrichtungen (130-k) gehört.

2. Verfahren (200) nach Anspruch 1, wobei die eine oder mehreren Kameras (135-k, 142-m) eines oder mehrere der folgenden Elemente umfassen:
ein Kamerasystem (142), das eine oder mehrere Kameras (142-m) umfasst, die ausgelegt sind zum Aufnehmen von Bildern von Passagieren an der Station (115),
entsprechende Kameras (135-k), die in der einen oder den mehreren Bedienfeldeinrichtungen (130-k) enthalten sind, die an der Station (115) angeordnet sind, wobei die Kameras (135-k) ausgelegt sind zum Aufnehmen von Bildern von Passagieren, welche die entsprechende Bedienfeldeinrichtung (130-k) bedienen.

3. Verfahren (200) nach Anspruch 1 oder 2,
wobei die Interaktionsanalyse ein Identifizieren, für die eine oder mehreren Bedienfeldeinrichtungen (130-k), eines oder mehrerer Aspekte von anomalen Passagierbewegungen in Bezug auf eine entsprechende Einrichtung der einen oder den mehreren Bedienfeldeinrichtungen (130-k) umfasst, und
wobei die Fehlererkennung ein Erkennen eines Fehlers umfasst, der zu der entsprechenden Einrichtung der einen oder den mehreren Bedienfeldeinrichtungen (130-k) gehört, als Reaktion auf eine Anzahl von Gelegenheiten, die anomale Passagierbewegungen in Bezug auf die entsprechende Einrichtung der einen oder den mehreren Bedienfeldeinrichtungen (130-k) repräsentieren, wobei die Anzahl einen vordefinierten Schwellenwert überschreitet.

4. Verfahren (200) nach Anspruch 3, wobei das Identifizieren des einen oder der mehreren Aspekte von anomalen Passagierbewegungen in Bezug auf die entsprechende Einrichtung der einen oder den mehreren Bedienfeldeinrichtungen (130-k) für einen entsprechenden Passagier eines oder mehrere der Folgenden umfasst:
Ermitteln, dass der entsprechende Passagier auf die entsprechende Einrichtung der einen oder den mehreren Bedienfeldeinrichtungen (130-k) zugegriffen hat, aber die Station (115) verlassen hat, ohne den Aufzug des Aufzugssystems (100) von dort zu betreten,
Ermitteln, dass der entsprechende Passagier auf eine andere Einrichtung der einen oder den mehreren Bedienfeldeinrichtungen (130-k) zugegriffen hat, nachdem er auf die entsprechende Einrichtung der einen oder den mehreren Bedienfeldeinrichtungen (130-k) zugegriffen hatte.

5. Verfahren (200) nach einem der Ansprüche 1 bis 4, das ein Aufrufen einer oder mehrerer der folgenden Aktionen als Reaktion auf ein Erkennen eines Fehlers, der zu einer bestimmten Einrichtung der einen oder den mehreren Bedienfeldeinrichtungen (130-k) gehört, umfasst:
Steuern der entsprechenden Einrichtung der einen oder den mehreren Bedienfeldeinrichtungen (130-k), um über ein darin enthaltenes Anzeigefeld (133-k) einen Hinweis auf den erkannten Fehler anzuzeigen,
Steuern der entsprechenden Einrichtung der einen oder den mehreren Bedienfeldeinrichtungen (130-k), um über ein darin enthaltenes Anzeigefeld (133-k) eine Wegführung zu einer anderen Einrichtung der einen oder den mehreren Bedienfeldeinrichtungen (130-k) anzuzeigen,
mindestens teilweises Deaktivieren eines Betriebs der entsprechenden Einrichtung der einen oder den mehreren Bedienfeldeinrichtungen (130-k),
Ausgeben eines Wartungsanrufs, der zu der entsprechenden Einrichtung der einen oder den mehreren Bedienfeldeinrichtungen (130-k) gehört,
Melden des erkannten Fehlers an eine Aufzugsteuereinheit (120) des Aufzugssystems (100).

6. Verfahren (200) nach einem der Ansprüche 1 bis 4, wobei die Interaktionsanalyse ein Ermitteln, für die eine oder mehreren Bedienfeldeinrichtungen (130-k), eines oder mehrerer Aspekte umfasst, die eine Interaktion zwischen einem Zugangsberechtigungslesegerät (136-k) in einer entsprechenden Einrichtung der einen oder den mehreren Bedienfeldeinrichtungen (130-k) und einem Zugangsberechtigungsnachweis eines Passagiers charakterisieren, nachdem der Passagier den Zugangsberechtigungsnachweis angelegt hat, um die entsprechende Einrichtung der einen oder den mehreren Bedienfeldeinrichtungen (130-k) zu bedienen, und
wobei die Fehlererkennung ein Erkennen eines Fehlers umfasst, der zu der entsprechenden Einrichtung der einen oder den mehreren Bedienfeldeinrichtungen (130-k) gehört, als Reaktion auf den einen oder die mehreren Aspekte, welche die Interaktion charakterisieren, die eine mangelhafte Interaktion hinsichtlich eines oder mehrerer vordefinierter Kriterien anzeigt.

7. Verfahren (200) nach Anspruch 6, wobei mindestens einer der folgenden Aspekte zutrifft:
der eine oder die mehreren Aspekte, welche die Interaktion charakterisieren, umfassen einen Abstand zwischen dem Zugangsberechtigungsnachweis und dem Zugangsberechtigungslesegerät (136-k), nachdem der Passagier den Zugangsberechtigungsnachweis angelegt hat, und wobei die Fehlererkennung ein Identifizieren einer mangelhaften Interaktion als Reaktion auf den Abstand zwischen dem Zugangsberechtigungsnachweis und dem Zugangsberechtigungslesegerät (136-k) umfasst, der einen vordefinierten Schwellenwertabstand überschreitet;
der eine oder die mehreren Aspekte, welche die Interaktion charakterisieren, umfassen eine Dauer einer Interaktion zwischen dem Zugangsberechtigungsnachweis und dem Zugangsberechtigungslesegerät (136-k), nachdem der Passagier den Zugangsberechtigungsnachweis angelegt hat, und wobei die Fehlererkennung ein Identifizieren einer mangelhaften Interaktion als Reaktion auf die Dauer der Interaktion zwischen dem Zugangsberechtigungsnachweis und dem Zugangsberechtigungslesegerät (136-k) umfasst, die unter einer vordefinierten Schwellenwertdauer liegt;
der eine oder die mehreren Aspekte, welche die Interaktion charakterisieren, umfassen eine Bewegungsgeschwindigkeit des Zugangsberechtigungsnachweises in Bezug auf das Zugangsberechtigungslesegerät (136-k), nachdem der Passagier den Zugangsberechtigungsnachweis angelegt hat, und wobei die Fehlererkennung ein Identifizieren einer mangelhaften Interaktion als Reaktion auf Bewegungsgeschwindigkeit des Zugangsberechtigungsnachweises in Bezug auf das Zugangsberechtigungslesegerät (136-k) umfasst, die eine vordefinierte Schwellenwertgeschwindigkeit überschreitet.

8. Verfahren (200) nach Anspruch 6 oder 7, das ferner ein Aufrufen einer oder mehrerer der folgenden Aktionen als Reaktion auf das Identifizieren einer mangelhaften Interaktion zwischen dem entsprechenden Zugangsberechtigungslesegerät (136-k) und dem Zugangsberechtigungsnachweis des Passagiers umfasst:
Steuern der entsprechenden Einrichtung der einen oder den mehreren Bedienfeldeinrichtungen (130-k), um über ein darin enthaltenes Anzeigefeld (133-k) einen Hinweis auf eine mangelhafte Interaktion zwischen dem entsprechenden Zugangsberechtigungslesegerät (136-k) und dem Zugangsberechtigungsnachweis des Passagiers anzuzeigen;
Steuern der entsprechenden Einrichtung der einen oder den mehreren Bedienfeldeinrichtungen (130-k), um über ein darin enthaltenes Anzeigefeld (133-k) eine Charakterisierung einer mangelhaften Interaktion zwischen dem entsprechenden Zugangsberechtigungslesegerät (136-k) und dem Zugangsberechtigungsnachweis des Passagiers anzuzeigen, wobei die Charakterisierung den Typ der Mängel anzeigt.

9. Überwachungssystem zum Überwachen einer Passagierinteraktion mit einer oder mehreren Bedienfeldeinrichtungen (130-k) zum Eingeben einer Beförderungsanforderung in ein Aufzugssystem (100) an einer Station (115) des Aufzugssystems (100),
**dadurch gekennzeichnet, dass** das Überwachungssystem umfasst:
eine oder mehrere Kameras (135-k, 142-m), die ausgelegt sind zum Aufnehmen von Bildern von Passagieren an der Station (115); und
einen Interaktionsanalysator (144) zum Ermitteln einer Passagierinteraktion mit der einen oder den mehreren Bedienfeldeinrichtungen (130-k), wobei der Interaktionsanalysator ausgelegt ist zum:
Ausführen basierend auf den entsprechenden Zeitreihen von Bildern, die von der einen oder den mehreren Kameras (135-k, 142-m) empfangen werden, einer Interaktionsanalyse zum Ermitteln eines oder mehrerer Aspekte der Passagierinteraktion mit der einen oder den mehreren Bedienfeldeinrichtungen (130-k);
Ausführen basierend auf dem einen oder den mehreren ermittelten Aspekten der Passagierinteraktion mit der einen oder den mehreren Bedienfeldeinrichtungen (130-k), einer Fehlererkennung für die eine oder mehreren Bedienfeldeinrichtungen (130-k); und
Aufrufen einer oder mehrerer vordefinierter Aktionen als Reaktion auf ein Erkennen eines Fehlers, der zu mindestens einem der einen oder den mehreren Bedienfeldeinrichtungen (130-k) gehört.

10. Überwachungssystem nach Anspruch 9,
wobei die Interaktionsanalyse ein Identifizieren, für die eine oder mehreren Bedienfeldeinrichtungen (130-k), eines oder mehrerer Aspekte von anomalen Passagierbewegungen in Bezug auf eine entsprechende Einrichtung der einen oder den mehreren Bedienfeldeinrichtungen (130-k) umfasst, und
wobei die Fehlererkennung ein Erkennen eines Fehlers umfasst, der zu der entsprechenden Einrichtung der einen oder den mehreren Bedienfeldeinrichtungen (130-k) gehört, als Reaktion auf eine Anzahl von Gelegenheiten, die anomale Passagierbewegungen in Bezug auf die entsprechende Einrichtung der einen oder den mehreren Bedienfeldeinrichtungen (130-k) repräsentieren, wobei die Anzahl einen vordefinierten Schwellenwert überschreitet.

11. Überwachungssystem nach Anspruch 9 oder 10,
wobei die Interaktionsanalyse ein Ermitteln, für die eine oder mehreren Bedienfeldeinrichtungen (130-k), eines oder mehrerer Aspekte umfasst, die eine Interaktion zwischen einem Zugangsberechtigungslesegerät (136-k) in einer entsprechenden Einrichtung der einen oder den mehreren Bedienfeldeinrichtungen (130-k) und einem Zugangsberechtigungsnachweis eines Passagiers charakterisieren, nachdem der Passagier den Zugangsberechtigungsnachweis angelegt hat, um die entsprechende Einrichtung der einen oder den mehreren Bedienfeldeinrichtungen (130-k) zu bedienen,
wobei die Fehlererkennung ein Erkennen eines Fehlers umfasst, der zu der entsprechenden Einrichtung der einen oder den mehreren Bedienfeldeinrichtungen (130-k) gehört, als Reaktion auf den einen oder die mehreren Aspekte, welche die Interaktion charakterisieren, die eine mangelhafte Interaktion hinsichtlich eines oder mehrerer vordefinierter Kriterien anzeigt.

12. Bedienfeldeinrichtung (130-k) zum Eingeben einer Beförderungsanforderung in ein Aufzugssystem (100) an einer Station (115) des Aufzugssystems (100),
**dadurch gekennzeichnet, dass** die Bedienfeldeinrichtung (130-k) umfasst:
einen Benutzereingabeabschnitt (132-k) zum Empfangen einer Beförderungsanforderung von einem Passagier; und
einen Steuerabschnitt (134-k), der einen Interaktionsanalysator (144) zum Ermitteln einer Passagierinteraktion mit der Bedienfeldeinrichtung(130-k) umfasst, wobei der Interaktionsanalysator (144) ausgelegt ist zum:
Empfangen einer entsprechenden Zeitreihe von Bildern von einer oder mehreren Kameras (135-k, 142-m), die ausgelegt sind zum Aufnehmen von Bildern von Passagieren an der Station (115);
Ausführen basierend auf den entsprechenden Zeitreihen von Bildern, die von der einen oder den mehreren Kameras (135-k, 142-m) empfangen werden, einer Interaktionsanalyse zum Ermitteln eines oder mehrerer Aspekte der Passagierinteraktion mit der Bedienfeldeinrichtung (130-k);
Ausführen basierend auf dem einen oder den mehreren ermittelten Aspekten der Passagierinteraktion mit der Bedienfeldeinrichtung (130-k), einer Fehlererkennung für die Bedienfeldeinrichtung (130-k); und
Aufrufen einer oder mehrerer vordefinierter Aktionen als Reaktion auf ein Erkennen eines Fehlers, der zu der Bedienfeldeinrichtung (130-k) gehört.

13. Bedienfeldeinrichtung (130-k) nach Anspruch 12, die ferner ein Anzeigefeld (133-k) zum Anzeigen von Informationen für den Passagier umfasst, wobei der Interaktionsanalysator (144) ausgelegt ist zum Aufrufen einer oder mehrere der folgenden Aktionen als Reaktion auf ein Erkennen eines Fehlers, der zu der Bedienfeldeinrichtung (130-k) gehört:
Steuern des Anzeigefelds (133-k) zum Anzeigen eines Hinweises auf den erkannten Fehler,
Steuern des Anzeigefelds (133-k) zum Anzeigen einer Wegführung zu einer anderen der einen oder mehreren Bedienfeldeinrichtungen (130-k).

14. Bedienfeldeinrichtung (130-k) nach Anspruch 12 oder 13, die ferner eine Kamera (135-k) umfasst, die ausgelegt ist zum Aufnehmen der entsprechenden Zeitreihen von Bildern von Passagieren, welche die entsprechende Bedienfeldeinrichtung (130-k) bedienen.

15. Computerprogramm, das einen computerlesbaren Programmcode umfasst, der konfiguriert ist zum Durchführen des Verfahrens nach einem der Ansprüche 1 bis 8, wenn der Programmcode in einer Computereinrichtung ausgeführt wird.

## Revendications

1. Procédé (200) de surveillance de l'interaction des passagers avec un ou plusieurs appareils de panneau de commande (130-k) destinés à passer des appels de transport vers un système d'ascenseur (100) d'un palier (115) du système d'ascenseur (100),
**caractérisé en ce que** le procédé (200) comprend en outre les étapes suivantes :
recevoir (202), dans un analyseur d'interactions (144), une série temporelle respective d'images provenant d'une ou plusieurs caméras (135-k, 142-m) agencées pour capturer des images de passagers sur le palier (115) ;
effectuer (204), par l'analyseur d'interactions (144), sur la base d'une série temporelle respective d'images reçues desdites une ou plusieurs caméras (135-k, 142-m), une analyse des interactions pour déterminer un ou plusieurs aspects des interactions des passagers avec les un ou plusieurs appareils de panneau de commande (130-k) ;
effectuer (206), par l'analyseur d'interactions (144), sur la base des un ou plusieurs aspects déterminés de l'interaction des passagers avec les un ou plusieurs appareils de panneau de commande (130-k), une détection de défaillance pour les un ou plusieurs appareils de panneau de commande (130-k) ; et
invoquer (208), par l'analyseur d'interactions (144), une ou plusieurs actions prédéfinies en réponse à la détection d'une défaillance qui concerne au moins l'un des un ou plusieurs appareils de panneau de commande (130-k).

2. Procédé (200) selon la revendication 1, dans lequel lesdites une ou plusieurs caméras (135-k, 142-m) comprennent un ou plusieurs des appareils suivants :
un système de caméra (142) comprenant une ou plusieurs caméras (142-m) arrangées pour capter des images de passagers au niveau du palier (115),
des caméras respectives (135-k) comprises dans les un ou plusieurs appareils de panneau de commande (130-k) disposés au niveau du palier (115), lesdites caméras (135-k) étant disposées pour capturer des images de passagers actionnant l'appareil de panneau de commande respectif (130-k).

3. Procédé (200) selon la revendication 1 ou la revendication 2,
dans lequel l'analyse des interactions comprend l'identification, pour lesdits un ou plusieurs appareils de panneau de commande (130-k), d'un ou plusieurs aspects d'un mouvement anormal d'un passager par rapport à un appareil respectif parmi les un ou plusieurs appareils de panneau de commande (130-k), et
dans lequel la détection de défaillance comprend la détection d'une défaillance qui se rapporte à l'appareil respectif des un ou plusieurs appareils de panneau de commande (130-k) en réponse à un nombre d'occasions qui représentent un mouvement anormal d'un passager par rapport à l'appareil respectif des un ou plusieurs appareils de panneau de commande (130-k) dépassant un seuil prédéfini.

4. Procédé (200) selon la revendication 3, dans lequel l'identification des un ou plusieurs aspects d'un mouvement anormal d'un passager par rapport à l'appareil respectif parmi les un ou plusieurs appareils de panneau de commande (130-k) pour un passager respectif comprend une ou plusieurs des étapes suivantes :
déterminer que le passager respectif a accédé à l'appareil respectif des un ou plusieurs appareils de panneau de commande (130-k) mais qu'il a quitté le palier (115) sans entrer dans un ascenseur du système d'ascenseur (100) de celui-ci,
déterminer que le passager respectif a accédé à un autre des un ou plusieurs appareils de panneau de commande (130-k) après avoir accédé à l'appareil respectif des un ou plusieurs appareils de panneau de commande (130-k).

5. Procédé (200) selon l'une quelconque des revendications 1 à 4, comprenant d'invoquer une ou plusieurs des actions suivantes en réponse à la détection d'une défaillance qui concerne un certain appareil parmi les un ou plusieurs appareils de panneau de commande (130-k) :
commander les un ou plusieurs appareils de panneau de commande respectifs (130-k) pour afficher, par l'intermédiaire d'un élément d'affichage (133-k) de celui-ci, une indication de la défaillance détectée,
commander les un ou plusieurs appareils de panneau de commande respectifs (130-k) pour afficher, par l'intermédiaire de l'élément d'affichage (133-k) de celui-ci, un guidage vers un autre des un ou plusieurs appareils de panneau de commande (130-k),
désactiver, au moins partiellement, le fonctionnement de l'appareil respectif des un ou plusieurs appareils de panneau de commande (130-k),
émettre un appel de maintenance qui se rapporte à l'appareil respectif parmi les un ou plusieurs appareils de panneau de commande (130-k),
signaler la défaillance détectée à un contrôleur d'ascenseur (120) du système d'ascenseur (100).

6. Procédé (200) selon l'une quelconque des revendications 1 à 4,
dans lequel l'analyse des interactions comprend de déterminer, pour les un ou plusieurs appareils de panneau de commande (130-k), un ou plusieurs aspects qui caractérisent une interaction entre un lecteur de justificatifs d'accès (136-k) dans un appareil respectif des un ou plusieurs appareils de panneau de commande (130-k) et un justificatif d'accès d'un passager lorsque le passager applique le justificatif d'accès afin d'utiliser l'appareil respectif des un ou plusieurs appareils de panneau de commande (130-k), et
dans lequel la détection de défaillance comprend de détecter une défaillance qui se rapporte à l'appareil respectif des un ou plusieurs appareils de panneau de commande (130-k) en réponse aux un ou plusieurs aspects qui caractérisent ladite interaction indiquant une interaction déficiente compte tenu d'un ou plusieurs critères prédéfinis.

7. Procédé (200) selon la revendication 6, dans lequel au moins l'un des points suivants s'applique :
les un ou plusieurs aspects qui caractérisent ladite interaction comprennent une distance entre le justificatif d'accès et le lecteur de justificatif d'accès (136-k) lorsque le passager applique le justificatif d'accès, et la détection de défaillance comprend l'identification d'une interaction déficiente en réponse à la distance entre le justificatif d'accès et le lecteur de justificatif d'accès (136-k) dépassant une distance seuil prédéfinie ;
les un ou plusieurs aspects qui caractérisent ladite interaction comprennent une durée d'interaction entre le justificatif d'accès et le lecteur de justificatif d'accès (136-k) lorsque le passager applique le justificatif d'accès, et la détection de défaillance comprend l'identification d'une interaction déficiente en réponse à la durée de l'interaction entre le justificatif d'accès et le lecteur de justificatif d'accès (136-k) inférieure à une durée seuil prédéfinie ;
les un ou plusieurs aspects qui caractérisent ladite interaction comprennent une vitesse de déplacement du justificatif d'accès par rapport au lecteur de justificatif d'accès (136-k) lorsque le passager applique le justificatif d'accès, et la détection de défaillance comprend l'identification d'une interaction déficiente en réponse à la vitesse de déplacement du justificatif d'accès par rapport au lecteur de justificatif d'accès (136-k) dépassant une vitesse seuil prédéfinie.

8. Procédé (200) selon la revendication 6 ou la revendication 7, comprenant en outre l'invocation d'une ou plusieurs des actions suivantes en réponse à l'identification d'une interaction déficiente entre le lecteur d'informations d'accès respectif (136-k) et le justificatif d'accès du passager :
commander l'appareil respectif des un ou plusieurs appareils de panneau de commande (130-k) pour afficher, par l'intermédiaire d'un élément d'affichage (133-k) de celui-ci, une indication d'une interaction déficiente entre le lecteur d'informations d'accès respectif (136-k) et le justificatif d'accès du passager ;
commander l'appareil respectif des un ou plusieurs appareils de panneau de commande (130-k) pour afficher, par l'intermédiaire d'un élément d'affichage (133-k) de celui-ci, une caractérisation d'une interaction déficiente entre le lecteur d'informations d'accès respectif (136-k) et le justificatif d'accès du passager, la caractérisation indiquant le type de déficience.

9. Système de surveillance pour surveiller l'interaction des passagers avec un ou plusieurs appareils de panneau de commande (130-k) destinés à passer des appels de transport vers un système d'ascenseur (100) d'un palier (115) du système d'ascenseur (100),
**caractérisé en ce que** le système de surveillance comprend :
une ou plusieurs caméras (135-k, 142-m) disposées pour capturer des images de passagers sur le palier (115) ; et
un analyseur d'interactions (144) pour déterminer les interactions des passagers avec les un ou plusieurs appareils de panneau de commande (130-k), l'analyseur d'interactions étant agencé pour :
effectuer, sur la base de la série temporelle respective d'images reçues desdites une ou plusieurs caméras (135-k, 142-m), une analyse des interactions pour déterminer un ou plusieurs aspects des interactions des passagers avec les un ou plusieurs appareils de panneau de commande (130-k) ;
effectuer, sur la base des un ou plusieurs aspects déterminés de l'interaction des passagers avec les un ou plusieurs appareils de panneau de commande (130-k), une détection de défaillance pour les un ou plusieurs appareils de panneau de commande (130-k), et
invoquer une ou plusieurs actions prédéfinies en réponse à la détection d'une défaillance qui concerne au moins l'un des un ou plusieurs appareils de panneau de commande (130-k).

10. Système de surveillance selon la revendication 9, dans lequel l'analyse des interactions comprend l'identification, pour lesdits un ou plusieurs appareils de panneau de commande (130-k), d'un ou plusieurs aspects **d'un** mouvement anormal d'un passager par rapport à un appareil respectif parmi les un ou plusieurs appareils de panneau de commande (130-k), et
dans lequel la détection de défaillance comprend la détection d'une défaillance qui se rapporte à l'appareil respectif des un ou plusieurs appareils de panneau de commande (130-k) en réponse à un nombre d'occasions qui représentent un mouvement anormal d'un passager par rapport à l'appareil respectif des un ou plusieurs appareils de panneau de commande (130-k) dépassant un seuil prédéfini.

11. Système de surveillance selon la revendication 9 ou la revendication 10,
dans lequel l'analyse des interactions comprend de déterminer, pour les un ou plusieurs appareils de panneau de commande (130-k), un ou plusieurs aspects qui caractérisent une interaction entre un lecteur de justificatifs d'accès (136-k) dans un appareil respectif des un ou plusieurs appareils de panneau de commande (130-k) et un justificatif d'accès d'un passager lorsque le passager applique le justificatif d'accès afin d'utiliser l'appareil respectif des un ou plusieurs appareils de panneau de commande (130-k),
dans lequel la détection de défaillance comprend de détecter une défaillance qui se rapporte à l'appareil respectif des un ou plusieurs appareils de panneau de commande (130-k) en réponse aux un ou plusieurs aspects qui caractérisent ladite interaction indiquant une interaction déficiente compte tenu d'un ou plusieurs critères prédéfinis.

12. Appareil de panneau de commande (130-k) destiné à passer des appels de transport vers un système d'ascenseur (100) d'un palier (115) du système d'ascenseur (100),
**caractérisé en ce que** l'appareil de panneau de commande (130-k) comprend :
un élément d'entrée utilisateur (132-k) destiné à recevoir un appel de transport d'un passager ; et
un élément de commande (134-k) comprenant un analyseur d'interactions (144) pour déterminer l'interaction des passagers avec l'appareil de panneau de commande (130-k), l'analyseur d'interactions (144) étant agencé pour :
recevoir une série temporelle respective d'images provenant d'une ou plusieurs caméras (135-k, 142-m) agencées pour capturer des images de passagers sur le palier (115),
effectuer, sur la base de la série temporelle respective d'images reçues desdites une ou plusieurs caméras (135-k, 142-m), une analyse des interactions pour déterminer un ou plusieurs aspects des interactions des passagers avec l'appareil de panneau de commande (130-k),
effectuer, sur la base des un ou plusieurs aspects déterminés de l'interaction des passagers avec l'appareil de panneau de commande (130-k), une détection de défaillance pour l'appareil de panneau de commande (130-k), et
invoquer une ou plusieurs actions prédéfinies en réponse à la détection d'une défaillance qui concerne l'appareil de panneau de commande (130-k).

13. Appareil de panneau de commande (130-k) selon la revendication 12, comprenant en outre une partie d'affichage (133-k) pour afficher des informations à l'attention du passager, où l'analyseur d'interactions (144) est agencé pour invoquer une ou plusieurs des actions suivantes en réponse à la détection d'une défaillance qui concerne l'appareil de panneau de commande (130-k) :
commander l'élément d'affichage (133-k) pour afficher une indication de la défaillance détectée,
commander l'élément d'affichage (133-k) pour afficher un guidage vers un autre appareil des un ou plusieurs appareils de panneau de commande (130-k).

14. Appareil de panneau de commande (130-k) selon la revendication 12 ou la revendication 13, comprenant en outre une caméra (135-k) agencée pour capturer la série temporelle respective d'images de passagers actionnant l'appareil de panneau de commande (130-k).

15. Programme informatique comprenant un code de programme lisible par ordinateur configuré pour provoquer l'exécution du procédé selon l'une quelconque des revendications 1 à 8 lorsque ledit code de programme est exécuté sur un appareil informatique.
